Europäisches Patentamt

(19) European Patent Office

Office européen des brevets

(11) Publication number: **0 196 071**
**B1**

(12) **EUROPEAN PATENT SPECIFICATION**

(45) Date of publication of patent specification: **18.07.90**

(51) Int. Cl.⁵: **G 11 B 5/706**

(21) Application number: **86104108.5**

(22) Date of filing: **25.03.86**

(54) **Perpendicular magnetic recording medium.**

(30) Priority: **26.03.85 JP 61136/85**
**24.05.85 JP 112421/85**
**16.07.85 JP 156432/85**

(43) Date of publication of application:
**01.10.86 Bulletin 86/40**

(45) Publication of the grant of the patent:
**18.07.90 Bulletin 90/29**

(84) Designated Contracting States:
**DE FR GB**

(56) References cited:
**EP-A-0 116 881**
**DE-A-3 204 851**
**DE-A-3 228 403**

**Journal of Applied Physics, vol. 52, no. 3, partII, March 1981, American Institute of Physics K.Kobayashi and G. Ishida "Magnetic and structural properties of Rh substituted Co-Cr alloy films with perpendicular magnetic anisotropy" pages 2453-2455**

**The file contains technical information submitted after the application was filed and not included in this specification**

(73) Proprietor: **Matsushita Electric Industrial Co., Ltd.**
**1006, Oaza Kadoma**
**Kadoma-shi Osaka-fu, 571 (JP)**

(72) Inventor: **Sugita, Ryuji**
**8-7, Ogura-cho**
**Hirakata City, 573 (JP)**
Inventor: **Tohma, Kiyokazu**
**26-5, Ikaga-nishimachi**
**Hirakata City, 573 (JP)**
Inventor: **Honda, Kazuyoshi**
**5-34, Johnan-cho 1-chome**
**Takatsuki City, 569 (JP)**
Inventor: **Nanbu, Taro**
**3-5, Uenodouri 3-chome**
**Nada-ku Kobe City, 657 (JP)**

(74) Representative: **Dr. Elisabeth Jung Dr. Jürgen Schirdewahn Dipl.-Ing. Claus Gernhardt**
**P.O. Box 40 14 68 Clemensstrasse 30**
**D-8000 München 40 (DE)**

Courier Press, Leamington Spa, England.

**Description**

1. Field of the invention

The present invention relates generally to perpendicular magnetic recording medium, and more particularly to an improvement in recording and reproducing characteristics in high density recording.

2. Description of the related art

Perpendicular magnetic recording medium has been investigated for pursuing higher density recording. The perpendicular magnetic recording medium is suitable for use in shorter wave length. Demagnetizing field in the medium decreases as wave length becomes short, and accordingly a high reproduced output is obtainable in the shorter wave length.

Perpendicular magnetic recording medium has a perpendicular anistropic film of CoCr, CoV or CoCrRh usually formed by sputtering method on the substrate. The sputtering method has a slow deposition rate, and hence is not suitable for mass production of the medium. Vacuum deposition method is another method of making perpendicular magnetic medium, and in the vacuum deposition method, including evaporation method for ionizing a part of evaporated atoms like ion plating method, the rate of deposition is fast (over 1 micrometer per second) by two figures in comparison with the sputtering method, and hence it is suitable for mass production of the medium. No condition for obtaining excellent recording and reproducing characteristics particularly in the range of short wave length has been disclosed yet.

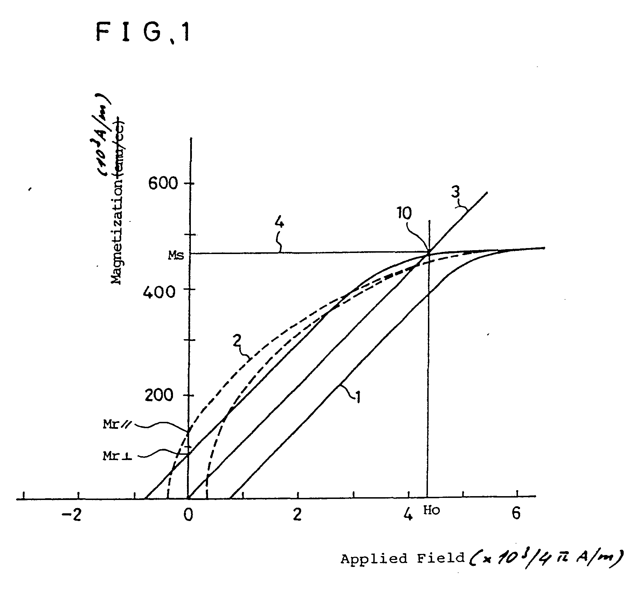

According to the academic report so far available, the relation between the value of the ratio $Mr_\perp/M_{//}$ and low recording and reproducing characteristics was not paid attention to ($Mr_\perp$ is the perpendicular remanent magnetization and $Mr_{//}$ is the longitudinal remanent magnetization). According to investigation by Langland et al. ("Recording on perpendicular anistropic media with ring heads", IEEE transaction magnetics, Vol. MAG-17, No. 6, November 1981) $Mr_\perp/Mr_{//}$ ratios of over 1 are shown (See "Media" in column 1 and Table 1). In other paper, similar ratios $Mr_\perp/Mr_{//}$ are shown. For instance, see Kobayashi et al. "Magnetic and structural properties of Rh substituted Co-Cr alloy films with perpendicular magnetic anistropy", Magnetism & Magnetic Materials, J. Appl. Phys. Vol. 52, No. 3, March 1981, Fig. 7; and Barbero et al. "Magnetization reversal in sputtered Co-Cr films" IEEE transaction of magnetics, Vol. MAG-18, No. 6, November 1982, Fig. 1. In such conventional papers, it has been a common notion that, it is a matter of course, a magnetic anistropic film having $Mr_\perp/Mr_{//}$ ratio of over 1 is a necessary condition for perpendicular magnetic recording medium. But the magnetic anistropic film having such ratio does not produce sufficient output level in reproducing.

Object and summary of the invention

A primary purpose of the present invention is to provide an improved perpendicular magnetic recording medium wherein excellent recording and reproducing characteristics is achieved.

The perpendicular magnetic recording medium in accordance with the present invention comprises a substrate of non-magnetic substance, a perpendicular anistropic film comprising Co-Cr film formed on the substrate as a vacuum deposited layer, said perpendicular anistropic film having a perpendicular remanent magnetization $Mr_\perp$ and a longitudinal remanent magnetization $Mr_{//}$ wherein the value of the ratio $Mr_\perp/Mr_{//}$ is not less than 0.2 and less than 1, and said perpendicular anisotropic film having a saturation magnetization Ms and a magnetic field intensity Ho having a relation so that the value of the ratio Ho/Ms is not more than 3.5/4, said magnetic field intensity Ho being the magnetic field intensity at an intersecting point of a first line and a second line in the perpendicular hysteresis loop of said perpendicular anisotropic film, where the first line passes through the origin and has the same slope as the slope of the perpendicular hysteresis loop at zero magnetization and the second line is parallel to the X-axis graduated with the magnetic field intensity and shows said saturation magnetization Ms.

Furthermore a method for magnetic recording using said perpendicular magnetic recording medium is provided.

Brief description of the drawings

Fig. 1 shows an instance of partial hysteresis loops of perpendicular magnetic recording medium, measured with vibrating sample magnetometer both perpendicular and longitudinal to a plane of the medium.

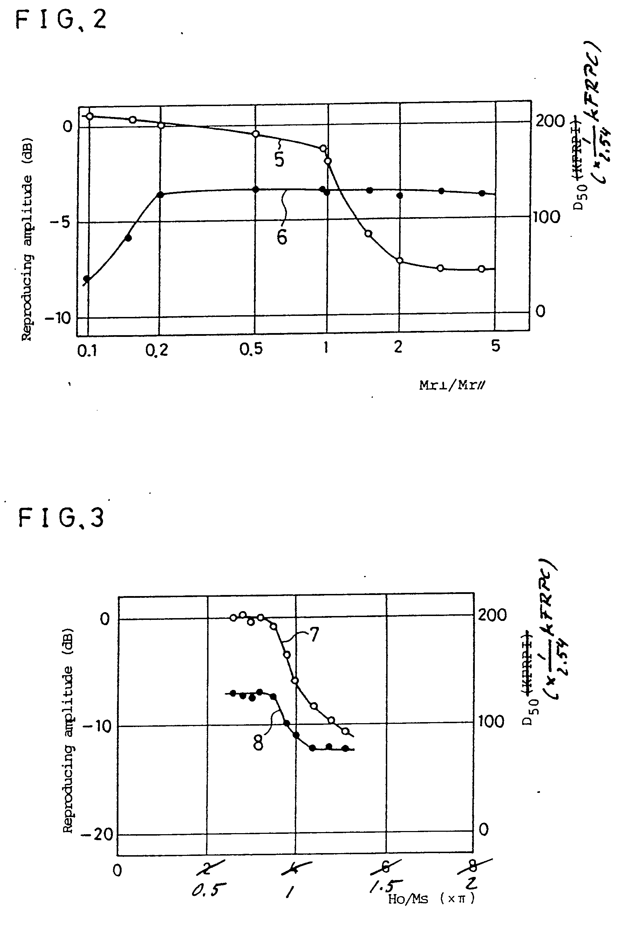

Fig. 2 shows relations between ratio $Mr_\perp/Mr_{//}$ and reproduced signal, and the ratio $Mr_\perp/Mr_{//}$ and $D_{50}$, which is recording density that the reproduced signal amplitude become 50% of value at recording density of 400 FRPC, 400 FRPC is an abbreviation for 400 Flux Reversals per cm, which means a condition of recording digital signal wherein magnetization reverses 400 times per cm.

Fig. 3 shows relations between the ratio Ho/Ms and the reproduced signal, and the ratio Ho/Ms and $D_{50}$. Ms designates saturation magnetization and Ho designates magnetic field intensity at an intersecting point of a first line and a second line in perpendicular hysteresis loop where the first line is passing through origin and having the same slope with slope of the perpendicular hysteresis loop at zero magnetization and the second line is parallel to X-axis and showing the saturation magnetization Ms.

## EP 0 196 071 B1

Description of the preferred embodiments

Fig. 1 shows an instance of partial hysteresis loops of a perpendicular magnetic recording medium, measured with vibrating sample magnetometer both perpendicular and longitudinal to a plane of the medium. X-axis is graduated with applied field H, and Y-axis is graduated with magnetization M. A solid line 1 shows hysteresis loop of the medium in perpendicular direction. A dotted line 2 shows hysteresis loop of the medium in parallel direction (in-plane). Perpendicular remanent magnetization $Mr_\perp$ is remanent magnetization in perpendicular direction. Longitudinal remanent magnetization $Mr_{//}$ is remanent magnetization in parallel direction. A straight line 3 passes through origin and has the same slope with slope of the perpendicular hysteresis loop 1 at zero magnetization. A line 4 parallel to X-axis shows a saturation magnetization Ms. Ho is magnetic field intensity at an intersection point 10 of the lines 3 and 4.

In Fig. 2 a curve 5 shows relation between ratio $Mr_\perp/Mr_{//}$ and reproducing amplitude in low recording density of the perpendicular magnetic recording medium. The medium has a perpendicular anistropy film of CoCr ·alloy over a substrate of polymer. A 0.25 micrometer thick CoCr film is formed by vacuum deposition method. A head used for evaluation is a ring shaped head of MnZn ferrite with gap length of 0.2 micrometer. As shown in Fig. 2, over 1 of the ratio $Mr_\perp/Mr_{//}$, the reproducing amplitude rapidly drops. When an amorphous head or sendust head was used instead of the MnZn ferrite head, the same characteristics was given.

In Fig. 2 a curve 6 shows relation between the value of ratio $Mr_\perp/Mr_{//}$ and $D_{50}$. The reproduced amplitudes are shown as values divided by the reproduced amplitudes in ratio $Mr_\perp/Mr_{//}$ of 0.2.

As shown in Fig. 2, when the ratio $Mr_\perp/Mr_{//}$ is less than 0.2, $D_{50}$ value rapidly drops. When an amorphous head or sendust head was used instead of the MnZn ferrite head, the same characteristics were given.

Therefore, obtaining excellent recording and reproducing characteristics, the ratios $Mr_\perp/Mr_{//}$ of from 0.2 to 1 are desirable; whereas in the former sense evidenced from the paper above, the ratios $Mr_\perp/Mr_{//}$ of over 1 are desirable for the film produced by sputtering. The film having the ratio $Mr_\perp/Mr_{//}$ of from 0.2 to 1 can be produced under the easier condition than the film having the ratio $Mr_\perp/Mr_{//}$ of over 1, particularly in case of CoCr alloy film produced by vacuum deposition method. Therefore, the medium according to the present invention is suitable for mass production particularly in the vacuum deposited CoCr film. Recording and reproducing characteristics of the single layer medium having the perpendicular anistropic film formed directly on the substrate by a ring-shaped head has been described above.

Fig. 3 shows relations between a ratio Ho/Ms and the reproduced signal, and the ratio Ho/Ms and $D_{50}$. In Fig. 3 a curve 7 shows relation between the ratio Ho/Ms and reproducing amplitude in low recording density of the perpendicular magnetic recording medium having the ratio $Mr_\perp/Mr_{//}$ of from 0.2 to 1. The medium has the perpendicular anistropic film of CoCr alloy on a substrate of polymer. The 0.25 micrometer thick CoCr film is formed by vacuum deposition method. A head used for evaluation is a ring shaped head of MnZn ferrite with a gap length of 0.2 micrometer. As shown in Fig. 3, over 3.5/4 of the ratio Ho/Ms both the reproducing amplitude and $D_{50}$ rapidly drop.

For obtaining excellent recording and reproducing characteristics, the ratios Ho/Ms of no more than 3.5/4 are therefore desirable. It is not clear yet why the characteristics of the film depend on the ratio Ho/Ms. But it is hypothesized that the characteristics depend on the microscopic composition distribution of the film which is related to the ratio Ho/Ms.

In other modified embodiments of the invention an under-layer having no ferromagnetism may be provided between the substrate and the perpendicular anisotropy film. Providing the under-layer makes the following two advantages:

One is to obtain the good characteristics of reproducing amplitude and $D_{50}$ and other is to obtain the fixed characteristic being independent of the ratio Ho/Ms.

The former advantage is effective particularly in using imperfectly degassed substrate. The word "degas" means to remove the not only gas but also water in the substrate before evaporating. Use of glass or single crystal of Si as the substrate with the perpendicular anisotropy film formed thereon, produces good characteristic of $D_{50}$ as shown by curve 5 in Fig. 2. Use of almost perfectly degassed polymer substrate also produces good characteristic of $D_{50}$. For carrying out perfect degassing, the polymer substrate should be maintained at a temperature of about 200°C for 24 hours in a vacuum. Therefore, the perfect degassing reduces mass productivity of the medium. But, imperfect degassing causes the reduction of $D_{50}$ when no under-layer is provided. When the under-layer is provided between the substrate and the perpendicular anistropy film, good characteristics of $D_{50}$ is obtained even by using the imperfectly degassed substrate. Therefore, forming the under-layer improves mass productivity of the medium.

Further, the characteristics of the medium are influenced by crystal state or kind of the crystal in the polymer substrate. But controlling of the crystal state is very difficult. When the under-layer is provided between the substrate and the perpendicular film, good characteristic of $D_{50}$ is obtained without controlling the crystal state and irrespective of the kind of the crystal which varies with the kind of the substrate.

The latter advantage is observed particularly when using Ti film or $Al_2O_3$ film as the under-layer. Use of the Ti film or the $Al_2O_3$ film produces good fixed characteristic being independent of the ratio Ho/Ms. Even in the ratio Ho/Ms of over 3.5/4, high reproducing amplitude and high $D_{50}$ are obtainable by providing the under-layer between the substrate and the perpendicular anisotropic film. It is not clear yet why the characteristic of the medium is improved by providing the under-layer.

3

Table 1 shows comparisons of the characteristics between comparison example medium having no under-layer and the embodiment medium having the under-layer. Both the medium has the perpendicular anistropic film of CoCr alloy on the imperfectly degassed substrate of polymer. A 0.2 micrometer thick CoCr film is formed by vacuum deposition method. A 0.02 micrometer thick Ti film is formed as the under-layer. A head used for evaluation is a ring shaped head of MnZn ferrite with gap of 0.13 micrometer length.

In the table, Sample 1 has Ti film and has the ratio $Mr_{\perp}/Mr_{//}$ of 0.5. Sample 2 has Ti film and has the ratio $Mr_{\perp}/Mr_{//}$ of 2.2. Sample 3 has no Ti film and has the ratio $Mr_{\perp}/Mr_{//}$ of 0.5. Sample 4 has no Ti film and has the ratio $Mr_{\perp}/Mr_{//}$ of 2.2.

TABLE 1
Medium properties

|  | Sample 1 | Sample 2 | Sample 3 | Sample 4 |
|---|---|---|---|---|
| Ti layer | Provided | Provided | No provided | No provided |
| Ratio $Mr_{\perp}/Mr_{//}$ | 0.5 | 2.2 | 0.5 | 2.2 |
| Reproducing amplitude in low-frequency (dB) | 0 | −8 | −2.5 | −8 |
| $D_{50}$ (kFRPC) | 200 | 160 | 60 | 150 |

As shown in Table 1, Sample 1 has superior reproducing amplitude and $D_{50}$ than other Samples. When the ratio $Mr_{\perp}/Mr_{//}$ is less than 1 and not less than 0.2 in the medium having the Ti layer, the characteristics similar to Sample 1 are obtained. For the ratio $Mr_{\perp}/Mr_{//}$ of less than 0.2, no perpendicular anistropy is observed. When the ratio $Mr_{\perp}/Mr_{//}$ is above 1 in the medium having Ti layer, characteristics similar to Sample 2 are obtained. The reproduced amplitude in low recording density of Sample 2 is lower than that of Sample 1. Exclusion of the Ti layer particularly reduces $D_{50}$ of the medium (see Sample 3). Sample 2 has similar characteristics to Sample 4. When the ratio $Mr_{\perp}/Mr_{//}$ is above 1, the advantage produced by providing Ti layer is not obtainable. When the amorphous head or sendust head was used instead of the MnZn ferrite head, the same characteristics were given.

Table 2 shows comparisons of the characteristics between the medium having no under-layer and the medium having the under-layer. The medium has the perpendicular anistropic film of CoCr alloy on the imperfectly degassed substrate of polymer. A 0.2 micrometer thick CoCr film is formed by vacuum deposition method. A 0.02 micrometer thick $Al_2O_3$ is formed as the under-layer. A head used for evaluation is ring shaped head of MnZn ferrite with gap of 0.15 micrometer length.

Sample 1 has $Al_2O_3$ film and has the ratio $Mr_{\perp}/Mr_{//}$ of 0.5. Sample 2 has $Al_2O_3$ film and has the ratio $Mr_{\perp}/Mr_{//}$ of 1.8. SAmple 3 has no $Al_2O_3$ film and has ratio $Mr_{\perp}/Mr_{//}$ of 0.5. Sample 4 has no $Al_2O_3$ film and has ratio $Mr_{\perp}/Mr_{//}$ of 1.8.

TABLE 2
Medium properties

|  | Sample 1 | Sample 2 | Sample 3 | Sample 4 |
|---|---|---|---|---|
| $Al_2O_3$ layer | Provided | Provided | No provided | No provided |
| Ratio $Mr_{\perp}/Mr_{//}$ | 0.5 | 1.8 | 0.5 | 1.8 |
| Reproducing amplitude in low-frequency (dB) | 0 | −7 | −2.5 | −7 |
| $D_{50}$ (kFRPC) | 190 | 140 | 60 | 130 |

As shown in Table 2, Sample 1 has superior reproduced amplitude and $D_{50}$ than other Samples. When the ratio $Mr_{\perp}/Mr_{//}$ is less than 1 and not less than 0.2 in the medium having $Al_2O_3$ layer, the characteristics similar to Sample 1 are obtained. For the ratio $Mr_{\perp}/Mr_{//}$ of less than 0.2, no perpendicular anistropy is observed. When the ratio $Mr_{\perp}/Mr_{//}$ is above 1 in the medium having $Al_2O_3$ layer, the characteristics similar to Sample 2 are obtainable. The reproduced amplitude in low recording density of Sample 2 is lower than that of Sample 1. Exclusion of $Al_2O_3$ layer reduces particularly $D_{50}$ of the medium (see Sample 3). Sample 2 has similar characteristics to Sample 4. When the ratio $Mr_{\perp}/Mr_{//}$ is above 1, the advantage produced by providing $Al_2O_3$ layer is not observed. When the amorphous head or sendust head was used instead of the MnZn ferrite head, the same characteristics were given.

4

# EP 0 196 071 B1

In other embodiments, other non-ferromagnetism for under-layer materials which does not reduce crystal orientations of the CoCr film may be used.

## Claims

1. A perpendicular magnetic recording medium comprising:
a substrate of non-magnetic substance,
a perpendicular anisotropic film comprising CoCr formed on the substrate as a vacuum deposited layer,
said perpendicular anistropy film having a perpendicular remanent magnetization $Mr_\perp$ and a longitudinal remanent magnetization $Mr_{//}$ wherein the value of the ratio $Mr_\perp/Mr_{//}$ is not less than 0.2 and less than 1, and said perpendicular anistropic film having a saturation magnetization Ms and a magnetic field intensity Ho having a relation so that the value of the ratio Ho/Ms is not more than 3.5/4,
said magnetic field intensity Ho being the magnetic field intensity at an intersecting point of a first line and a second line in the perpendicular hysteresis loop of said perpendicular anistropic film, where the first line passes through the origin and has the same slope as the slope of the perpendicular hysteresis loop at zero magnetization and the second line is parallel to the X-axis graduated with the magnetic field intensity and shows said saturation magnetization Ms.

2. Perpendicular magnetic recording medium in accordance with claim 1, wherein chief ingredient of said perpendicular anistropic film is Co and Cr.

3. Perpendicular magnetic recording medium in accordance with claim 1, further comprising:
film of non-ferromagnetism between said substrate and said perpendicular anistropic film.

4. Perpendicular magnetic recording medium in accordance with claim 3, wherein said film of non-ferromagnetism is Ti film.

5. Perpendicular magnetic recording medium in accordance with claim 3, wherein said film of non-ferromagnetism is $Al_2O_3$ film.

6. Method for magnetic recording comprising the steps of:
driving a perpendicular magnetic recording medium comprising a substrate and a vacuum deposited perpendicular anistropic film over a recording gap of a magnetic head, and
applying magnetic field to said perpendicular magnetic recording medium by said magnetic recording head,
characterized in that
said perpendicular anistropic film has a perpendicular remanent magnetization $Mr_\perp$ and a longitudinal remanent magnetization $Mr_{//}$ wherein the value of the ratio $Mr_\perp/Mr_{//}$ is not less than 0.2 and less than 1, and said perpendicular anisotropic film has a saturation magnetization Ms and a magnetic field intensity Ho having a relation so that the value of the ratio Ho/Ms is not more than 3.5/4,
said magnetic field intensity Ho being the magnetic field intensity at an intersecting point of a first line and a second line in the perpendicular magnetization hysteresis loop of said perpendicular anistropic film, where the first line passes through the origin and has the same slope as the slope of the perpendicular magnetization hysteresis loop at zero magnetization and the second line is parallel to the X-axis graduated with the magnetic field intensity and shows said saturation magnetization Ms.

## Patentansprüche

1. Aufzeichnungsträger mit senkrechter Magnetisierung, umfassend:
ein Substrat aus einer nicht magnetischen Substanz,
einen senkrechten anisotropen Film umfassend CoCr, der an dem Substrat als eine vakuumniedergeschlagene Schicht gebildet ist, wobei
der senkrechte anisotrope Film eine senkrechte remanente Magnetisierung $Mr_\perp/Mr_{//}$ und eine remanente Längsmagnetisierung $Mr_{//}$ hat, wobei der Wert des Verhältnisses $Mr_\perp/Mr_{//}$ nicht kleiner als 0,2 und kleiner als 1 ist, und der senkrechte anisotrope Film eine Sättigungsmagnetisierung Ms und eine Magnetfeldintensität Ho hat mit einer Relation derart, daß der Wert des Verhältnisses Ho/Ms nicht größer als 3,5/4 ist, und
die Magnetfeldintensität Ho die Magnetfeldintensität an einem Schnittpunkt einer ersten Linie und einer zweiten Linie in der senkrechten Hystereseschleife des senkrechten anistropen Filmes ist, wobei die erste Linie durch den Ursprung hindurchgeht und die gleiche Neigung wie die Neigung der senkrechten Hystereseschleife bei einer Magnetisierung null hat und die zweite Linie parallel zu X-Achse verläuft, die mit der Magnetfeldintensität graduiert ist, und die Sättigungsmagnetisierung Ms zeigt.

2. Aufzeichnungsträger mit senkrechter Magnetisierung nach Anspruch 1, wobei der Hauptbestandteil des senkrechten anisotropen Filmes Co und Cr ist.

3. Aufzeichnungsträger mit senkrechter Magnetisierung nach Anspruch 1, weiter umfassend einen Film aus Nichtferromagnetismus zwischen dem Substrat und dem senkrechten anistropen Film.

4. Aufzeichnungsträger mit senkrechter Magnetisierung nach Anspruch 3, wobei der Film aus Nichtferromagnetismus ein Ti-Film ist.

5

5. Aufzeichnungsträger mit senkrechter Magnetisierung nach Anspruch 3, wobei der Film aus Nichtferromagnetismus ein $Al_2O_3$-Film ist.

6. Verfahren zum magnetischen Aufzeichnen, umfassend die Schritte des:

Antreibens eines Aufzeichnungsträgers mit senkrechter Magnetisierung, umfassend ein Substrat und einen vakuumniedergeschlagenen senkrechten anistropen Film, über einen Aufzeichnungsspalt eines Magnetkopfes, und des

Anlegens eines Magnetfeldes an den Aufzeichnungsträger mit senkrechter Magnetisierung durch den magnetischen Aufzeichnungskopf,

dadurch gekennzeichnet, daß

der senkrechte anistrope Film eine senkrechte remanente Magntisierung $Mr_\perp$ und eine remanente Längsmagnetisierung $Mr_{//}$ hat, wobei der Wert des Verhältnisses $Mr_\perp/Mr_{//}$ nicht kleiner als 0,2 und kleiner als 1 ist, und der senkrechte anistrope Film eine Sättigungsmagnetisierung Ms und eine Magnetfeldintensität Ho hat mit einer Relation derart, daß der Wert des Verhältnisses Ho/Ms nicht größer als 3,5/4 ist, und

die Magnetifeldintensität Ho die MAgnetfeldintensität an einem Schnittpunkt einer ersten Linie und einer zweiten Linie in der senkrechten Magnetisierungs-Hystereseschleife des senkrechten anisotropen Filmes ist, wobei die erste Linie durch den Ursprung hindurchgeht und die gleiche Neigung wie die Neigung der senkrechten Magnetisierungs-Hystereseschleife bei einer Magnetisierung null hat und die zweite Linie parallel zu X-Achse verläuft, die mit der Magnetfeldintensität graduiert ist, und die Sättigungsmagnetisierung Ms zeigt.

## Revendications

1. Support d'enregistrement magnétique perpendiculaire, comprenant:
—un substrat en substance amagnétique,
—une pellicule anistropique perpendiculaire constituée de CoCr formée sur le substrat sous forme d'une couche déposée sous vide,
—la pellicule anistropique perpendiculaire ayant une aimantation rémanente perpendiculaire $Mr_\perp$ et une aimantation rémanente longitudinale $Mr_{//}$ où la valeur du rapport $Mr_\perp/Mr_{//}$ est supérieure à 0,2 et inférieure à 1, la pellicule anistropique perpendiculaire ayant une aimantation de saturation Ms et une intensité Ho du champ magnétique ayant une relation telle que la valeur du rapport Ho/Ms n'est pas supérieure à 3,5/4,
—l'intensité Ho du champ magnétique étant l'intensité du champ magnétique à un point d'intersection d'une première ligne et d'une seconde ligne dans la boucle d'hystérésis perpendiculaire de la pellicule anistropique perpendiculaire, où la première ligne passe par l'origine et a la même pente que celle de la boucle d'hystérésis perpendiculaire à l'aimantation zéro et la seconde ligne est parallèle à l'axe X, gradué avec l'intensité du champ magnétique et indique l'aimantation de saturation Ms.

2. Support d'enregistrement magnétique perpendiculaire selon la revendication 1, dans lequel:
—l'ingrédient principal de la pellicule anistropique perpendiculaire est Co et Cr.

3. Support magnétique perpendiculaire selon la revendication 1, comprenant en outre:
—une pellicule de non-ferromagnétisme entre le substrat et la pellicule anisotropique perpendiculaire.

4. Support d'enregistrement magnétique perpendiculaire selon la revendication 3, dans lequel:
—la pellicule de non-ferromagnétisme est une pellicule de Ti.

5. Support d'enregistrement magnétique perpendiculaire selon la revendication 3, dans lequel:
—la pellicule de non-ferromagnétisme est une pellicule de $Al_2O_3$.

6. Procédé d'enregistrement magnétique comprenant les étapes consistant à:
—entraîner un support d'enregistrement magnétique perpendiculaire comprenant un substrat et une pellicule anisotropique perpendiculaire sous vide sur l'entrefer d'enregistrement d'une tête magnétique, et
—appliquer le champ magnétique au support d'enregistrement magnétique perpendiculaire par la tête d'enregistrement magnétique,
caractérisé en ce que:
—la pellicule anisotropique perpendiculaire présente une aimantation rémanente perpendiculaire $Mr_\perp$ et une aimantation rémanente longitudinale $Mr_{//}$, où la valeur du rapport $Mr_\perp/Mr_{//}$ est supérieure à 0,2 et inférieure à 1, et la pellicule anisotropique perpendiculaire présente une aimantation de saturation Ms et une intensité Ho du champ magnétique ayant une relation telle que la valeur du rapport Ho/Ms n'est pas supérieure à 3,5/4,
—l'intensité Ho du champ magnétique étant l'intensité du champ magnétique à un point d'intersection d'une première ligne et d'une seconde ligne dans la boucle d'hystérésis d'aimantation perpendiculaire de la pellicule anisotropique perpendiculaire, où la première ligne passe par l'origine et a la même pente que celle ce la boucle d'hystérésis d'aimantation perpendiculaire à l'aimantation zéro et la seconde ligne est parallèle à l'axe des X gradué avec l'intensité du champ magnétique et indique l'aimantation de saturation Ms.

EP 0 196 071 B1

FIG.1

Applied Field $(\times 10^3/4\pi \ A/m)$

# F I G、2

# F I G、3